# EUROPÄISCHE PATENTSCHRIFT

(11) **EP 1 125 428 B1**
(45) Veröffentlichungstag und Bekanntmachung des Hinweises auf die Patenterteilung: **17.07.2002**
(21) Anmeldenummer: 99955718.4
(22) Anmeldetag: 15.09.1999
(51) Int. Cl.: H04N 5/44

(54) **SCHALTUNG ZUR WANDLUNG EINER BILDRATE**
CIRCUIT FOR TRANSFORMING AN IMAGE RATE
CIRCUIT PERMETTANT DE TRANSFORMER UN DEBIT BINAIRE

(30) Priorität: 30.09.1998 DE 19844937
(43) Veröffentlichungstag der Anmeldung: 22.08.2001
(73) Patentinhaber: Micronas Munich GmbH, 81541 München (DE)
(72) Erfinder: SCHEFFLER, Günter, D-80939 München (DE); SCHU, Markus, D-85435 Erding (DE)
(74) Vertreter: Patentanwälte Westphal, Mussgnug & Partner
(86) Internationale Anmeldenummer: DE9902938
(87) Internationale Veröffentlichungsnummer: WO0019713

(56) Entgegenhaltungen:
- EP-A- 0 370 500
- US-A- 5 708 480

## Beschreibung

Die Erfindung betrifft eine Schaltung zur Wandlung einer Bildrate (Halbbildwiederholfrequenz) bei einer Videosignal-Wiedergabeeinrichtung nach einem bewegungsadaptiven Verfahren, mit einem Bewegungsdetektor zum Erzeugen von Bewegungswerten von Bildpunkten, mit denen eine Einrichtung zum Umschalten der Halbbildfolge bei der Verdoppelung der Bildrate ansteuerbar ist.

Schaltungen dieser Art dienen im allgemeinen dazu, in Fernsehgeräten die Halbbildwiederholfrequenz von 50 bzw. 60 Hz zu verdoppeln, um dadurch das Großflächenflimmern zu vermindern und ein insgesamt ruhigeres Bild zu erzeugen.

Bei der Wandlung der Bildrate unterscheidet man zwischen einerseits statischen und andererseits bewegungsadaptiven und/oder bewegungskompensierenden Verfahren.

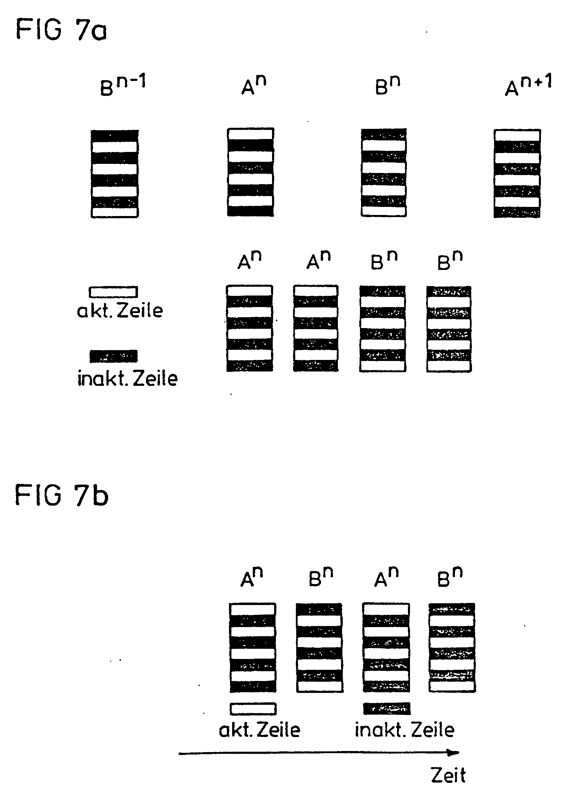

Bei einem statischen Verfahren werden die beiden Halbbilder A und B verdoppelt und gemäß Figur 7 entweder nacheinander (AABB, Figur 7a) oder verschachtelt (ABAB, Figur 7b) wiedergegeben. Die AABB-Wiedergabe hat den Vorteil, daß zwar eine sehr gute Bewegungsdarstellung möglich ist, das Kantenflackern damit aber nicht reduziert werden kann. Im Vergleich dazu ist es mit der ABAB-Rasterfolge, die praktisch eine Verdoppelung des Vollbildes bedeutet, möglich, das Kantenflackern bei Standbildern zu vermindern. Allerdings versagt diese Wiedergabe bei bewegten Bildern.

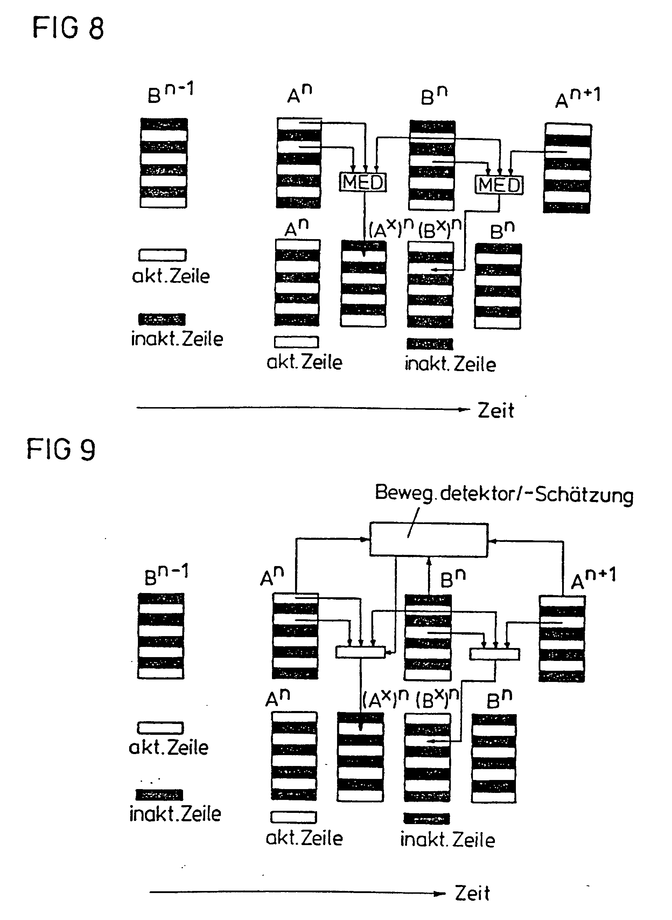

Weiterhin sind statische Verfahren gemäß Figur 8 bekannt, die mit einer AA*B*B- Rasterfolge arbeiten, wobei die Halbbilder A* und B* mit linearen oder nichtlinearen Verfahren berechnet werden. Zu diesem Zweck ist zum Beispiel die Verwendung von Medianfiltern bekannt, mit denen die Halbbilder (A*)ⁿ und (B*)ⁿ durch Interpolation der Halbbilder Aⁿ und Bⁿ bzw. Bⁿ und Aⁿ⁺¹ erzeugt werden.

Bewegungsadaptive und bewegungskompensierende Verfahren unterscheiden sich von den statischen Verfahren durch einen Bewegungsdetektor und/oder einen Bewegungsschätzerblock. Die entsprechende Halbbildverschachtelung ist prinzipiell in Figur 9 dargestellt. Der Bewegungsdetektorblock erzeugt nur Informationen über das Vorhandensein von Bewegungen im Bild, während der Bewegungsschätzerblock zusätzlich Informationen über die Größe und die Richtung der Bewegung ermittelt. Diese Informationen können auf verschiedene Weisen zur Verbesserung der Bildratenwandlung verwendet werden. Es ist zum Beispiel möglich, in Abhängigkeit von diesen Informationen eine bildpunkt- oder bildweise Umschaltung zwischen den beiden oben genannten statischen Verfahren vorzunehmen.

Nachteilig bei allen diesen Verfahren ist jedoch die Tatsache, daß sie sehr aufwendig sind, insbesondere wenn eine bewegungsabhängige Umschaltung der verschiedenen Raster- bzw.

Halbbildfolgen und eine Interpolation durchgeführt werden soll.

EP-A-0 370 500 offenbart eine Schaltung zur Wandlung einer Bildrate zur Flimmerreduktion in einem Fernsehempfänger.

US-A-5 708 480 zeigt eine weitere derartige Schaltung, die die Merkmale des Oberbegriffs des Anspruchs 1 aufweist.

Der Erfindung liegt die Aufgabe zugrunde, eine Schaltung der eingangs genannten Art zu schaffen, mit der auf relativ einfache Weise eine insbesondere bei bewegten Bildern wesentlich bessere Bildqualität erzielbar ist.

Gelöst wird diese Aufgabe gemäß Anspruch 1 mit einer Schaltung der eingangs genannten Art, bei der der Bewegungsdetektor eine erste Einrichtung zum Erzeugen von Bildpunkt-Bewegungssignalen umfaßt, die für jeden als bewegt ermittelten Bildpunkt einen ersten Zustand und für jeden als unbewegt ermittelten Bildpunkt einen zweiten Zustand haben, sowie eine zweite Einrichtung aufweist, mit der die Bildpunkt-Bewegungssignale zur Erzeugung von Bewegungswerten in der Weise korrigiert werden, daß ein Zustand, der von übereinstimmenden Zuständen benachbarter Bildpunkte abweicht, unberücksichtigt bleibt.

Besondere Vorteile dieser Lösung bestehen darin, daß keine Rückkopplung der für ein vorhergehendes Bild berechneten Bewegungswerte erforderlich ist. Weiterhin entfällt der im allgemeinen bei der Kombination von Verfahren mit verschiedenen Halbbildfolgen erforderliche Multiplizierer, da mit den erfindungsgemäß erzeugten Bewegungswerten ein einfacher Umschalter angesteuert werden kann. Außerdem werden durch die erfindungsgemäße Korrektur der Bildpunkt-Bewegungssignale Bewegungswerte erzeugt, mit denen auch eine schnelle Bewegung kleiner Objekte erfaßt und berücksichtigt werden kann.

Die Unteransprüche haben vorteilhafte Weiterbildungen der Erfindung zum Inhalt.

Danach umfaßt die erste Einrichtung zur Ermittlung des ersten oder zweiten Zustandes vorzugsweise Einheiten zur Erzeugung gesteuerter Kennlinien zur Bewertung von Halbbilddifferenzen in Abhängigkeit von Zeilendifferenzen, wobei bei kleinen Zeilendifferenzen die Bewegungsempfindlichkeit erhöht und bei großen Zeilendifferenzen die Bewegungsempfindlichkeit verringert ist.

Weiterhin weist die erste Einrichtung vorzugsweise Schaltungseinheiten zur Bildung von Zeilen- und Halbbild-Differenzen auf, wobei die Halbbild-Differenzen mit den Einheiten zur Erzeugung gesteuerter Kennlinien, die jeweils mit den Zeilendifferenzen beaufschlagt werden, bewertet und auf 1-Bit-Signale abgebildet und diese mit einem ODER-Gatter zur Erzeugung der Bildpunkt-Bewegungssignale verknüpft werden.

Durch die Erzeugung eines 1 bit Steuersignals ist es in einfacher Weise möglich, zwischen zwei verschiedenen Halbbildfolgen für jeden Bildpunkt umzuschalten.

Ferner umfaßt die zweite Einrichtung vorzugsweise eine erste Schaltungseinheit zur Bearbeitung der Bewegungssignale jedes Bildpunktes in der Weise, daß der erste Zustand in den zweiten Zustand geändert wird, wenn die Bewegungssignale aller angrenzenden Bildpunkte den zweiten Zustand aufweisen, wobei bei der Bearbeitung eines folgenden Bildpunktes ein zuvor korrigierter Zustand verwendet wird.

Dadurch wird eine zweidimensionale Korrektur der Bildpunkt-Bewegungssignale unter Ausnutzung von Plausibilitätskriterien sowie eine Homogenisierung von Bildbereichen durch Auslöschen und Auffüllen von Bewegungswerten erreicht, die zu einer weiteren Verbesserung der Bildqualität führt.

Weitere Einzelheiten, Merkmale und Vorteile der Erfindung ergeben sich aus der folgenden Beschreibung einer bevorzugten Ausführungsform anhand der Zeichnung. Es zeigen:
- Fig. 1: ein Blockschaltbild einer erfindungsgemäßen Schaltung;
- Fig. 2: ein Blockschaltbild einer ersten Einrichtung der erfindungsgemäßen Schaltung;
- Fig. 3: ein Blockschaltbild von Komponenten der ersten Einrichtung;
- Fig. 4: ein Blockschaltbild von weiteren Komponente der ersten Einrichtung;
- Fig. 5: ein Blockschaltbild einer zweiten Einrichtung der erfindungsgemäßen Schaltung;
- Fig. 6a bis 6g: Bildpunktkorrekturen zur Verdeutlichung der erfindungsgemäßen Erzeugung von Bewegungswerten;
- Fig. 7a, b: verschiedene bekannte Rasterfolgen, mit denen Halbbilder mittels eines statischen Verfahrens zur Verdoppelung der Bildrate dargestellt werden;
- Fig. 8: eine Erzeugung und Darstellung von interpolierten Halbbildern bei einem statischen Verfahren; und
- Fig. 9: eine Erzeugung und Darstellung von Halbbildern mit einem bewegungsadaptiven und/oder bewegungskompensierenden Verfahren.

Der Erfindung liegt die Erkenntnis zugrunde, daß eine besonders gute Bildqualität dann erzielt werden kann, wenn ein Bewegungsdetektor bildpunktweise Informationen über den Bewegungszustand eines Bildpunktes liefert und diese Informationen zur Umschaltung zwischen zwei verschiedenen, jeweils für den Bewegungszustand optimierten Verfahren herangezogen werden. Dies gilt insbesondere dann, wenn die nichtbewegten Bildteile mit einer Rasterfolge (Halbbildfolge) ABAB und die bewegten Bildteile mit der Rasterfolge AA*B*B gemäß einleitender Erläuterung dargestellt werden. Durch eine entsprechende bildpunktabhängige Umschaltung lassen sich die Vorteile beider Wiedergabearten kombinieren.

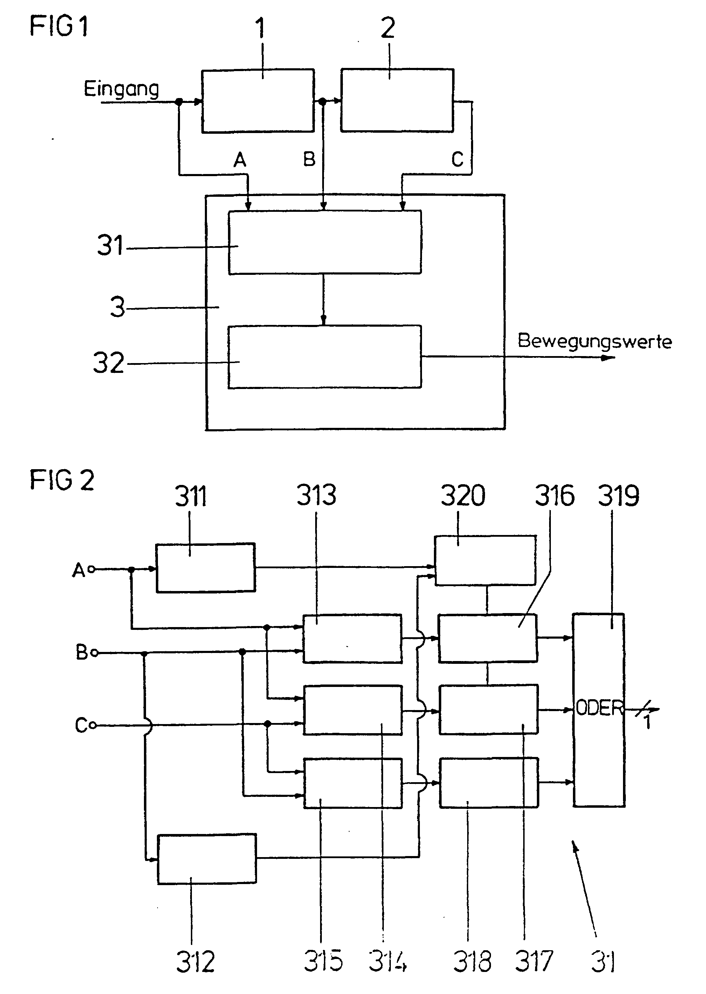

Ein Blockschaltbild einer erfindungsgemäßen Schaltung ist in Figur 1 gezeigt. Die Schaltung umfaßt einen ersten Halbbildspeicher 1, einen dazu in Reihe geschalteten zweiten Halbbildspeicher 2 sowie einen Bewegungsdetektor 3. Der Bewegungsdetektor umfaßt eine erste Einrichtung 31 zur Erzeugung von Bildpunkt-Bewegungssignalen, sowie eine zweite Einrichtung 32 zur Erzeugung von Bewegungswerten daraus.

Die an dem Eingang der Schaltung anliegenden Halbbildsignale werden in dem ersten und dem zweiten Halbbildspeicher 31, 32 zwischengespeichert und als erstes, zweites und drittes Halbbild A, B, C, die jeweils aufeinanderfolgen, der ersten Einrichtung 31 in dem Bewegungsdetektor 3 zuführt.

In der ersten Einrichtung 31 werden Filterungen durchgeführt und verschiedene Differenzwerte gebildet, die bildpunktweise berechnet und miteinander kombiniert werden. Als Ergebnis entstehen Bildpunkt-Bewegungssignale, die für jeden Bildpunkt mit einem ersten Zustand angeben, ob der entsprechende Bildpunkt als bewegt anzusehen ist und mit einem zweiten Zustand einen als unbewegt einzuordnenden Bildpunkt bezeichnen.

Mit der zweiten Einrichtung 32 wird eine Nachbearbeitung der Zustände der Bildpunkt-Bewegungssignale vorgenommen. Diese Nachbearbeitung hat das Ziel, die bewegten und die nicht bewegten Bildbereiche zu homogenisieren. Zu diesem Zweck werden einzelne kleine Bereiche, in denen die Bildpunkt-Bewegungssignale den ersten Zustand aufweisen und die innerhalb eines größeren Bereiches liegen, in dem die Bildpunkt-Bewegungssignale den zweiten Zustand haben, eliminiert bzw. ebenfalls in den zweiten Zustand gebracht.

Umgekehrt wird einzelnen Bildpunkten, denen der zweite Zustand zugeordnet wurde und die innerhalb eines Bereiches mit Bildpunkten des ersten Zustandes liegen, der erste Zustand zugeordnet. Dadurch entstehen homogene, als bewegt gekennzeichnete Bereiche, die mit den bewegten Bildteilen korrespondieren.

Diese Nachbearbeitung hat den besonderen Vorteil, daß ein nachgeschalteter 100 Hz-Konverter (Umschalter) stabil in dem Sinne arbeitet, daß er nicht ständig zwischen den beiden eingangs anhand der Figuren 7a und 7b erläuterten Rasterverfahren umschaltet, was zu sehr störenden Artefakten führen würde.

Ein entsprechendes Blockschaltbild der ersten Einrichtung 31 ist in Figur 2 gezeigt. Die erste Einrichtung 31 umfaßt eine erste Schaltungseinheit 311, an der das erste Halbbild A anliegt, sowie eine zweite Schaltungseinheit 312, der das zweite Halbbild B zugeführt wird. Die beiden Schaltungseinheiten 311, 312 dienen jeweils zur Bildung von Zeilendifferenzen. Die Einheit 320 bildet das Maximum aus beiden Zeitdifferenzen. Ferner ist eine dritte, eine vierte und eine fünfte Schaltungseinheit 313, 314 und 315 vorgesehen, die jeweils zur Erzeugung von Bilddifferenzen dienen. An der dritten Schaltungseinheit 313 liegt das erste und das zweite Halbbild A, B an. Der vierten Schaltungseinheit 314 wird das erste und das dritte Halbbild A, C zugeführt, während an der fünften Schaltungseinheit 315 das zweite und das dritte Halbbild B, C anliegt.

Die Ausgänge der dritten, vierten und fünften Schaltungseinheit liegen an einer ersten, einer zweiten bzw. einer dritten Einheit 316, 317, 318 zur Erzeugung gesteuerter Kennlinien an. Die Ausgänge dieser "Kennliniensteuerungen" werden mit einem ODER-Gatter 319 verknüpft. An allen Kennliniensteuerungen liegt der Ausgang der Einheit 320 an.

Aus den erzeugten Bilddifferenzen A-B, A-C und B-C werden mittels der Kennliniensteuerungen durch Abbildung auf 1-Bit-Signale die Bildpunkt-Bewegungssignale erzeugt. Hierzu wird eine Bewertung der Bilddifferenzen in Abhängigkeit von den Zeilendifferenzen aus den Halbbildern A bzw. B durchgeführt. Dabei wird bei kleinen Zeilendifferenzen die Empfindlichkeit vergrößert, bei großen Zeilendifferenzen die Empfindlichkeit verringert. Die Kennlinien können zweckmäßig als Nachschlagetabellen realisiert werden. Das Maximum der Zeitdifferenzen der Halbleiter A und B steuert alle Bilddifferenzen.

Die Auswertung der drei verschiedenen Bilddifferenzen hat sich deshalb als sehr vorteilhaft erwiesen, weil dadurch auch sehr schnell bewegte kleine Objekte erfaßt werden können.

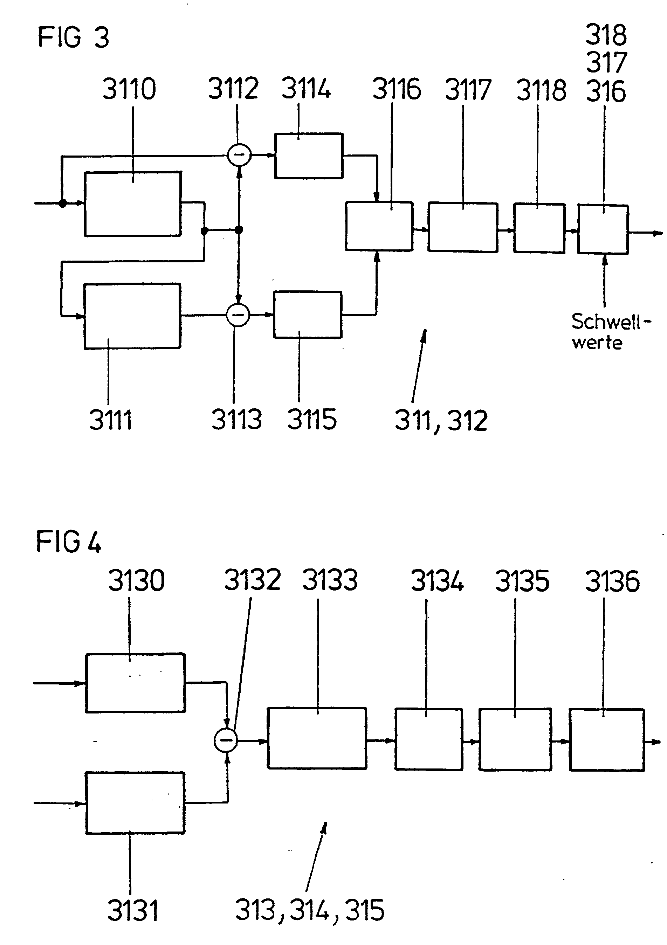

Die erste bzw. zweite Schaltungseinheit 311 bzw. 312 zur Bildung von Zeilendifferenzen ist im Detail in Figur 3 dargestellt. Jede dieser beiden Schaltungseinheiten umfaßt jeweils einen mit dem Eingang verbundenen ersten Zeilenspeicher 3110, an dessen Ausgang ein zweiter Zeilenspeicher 3111 angeschlossen ist. Weiterhin ist ein erster Subtrahierer 3112 vorgesehen, der mit dem Eingang der Schaltungseinheit sowie dem Ausgang des ersten Zeilenspeichers 3110 verbunden ist. Ein zweiter Subtrahierer 3113 ist mit dem Ausgang des ersten sowie dem Ausgang des zweiten Zeilenspeichers 3110, 3111 verbunden. Der Ausgang des ersten Subtrahierers 3112 liegt an einer ersten Einheit 3114 zur Betragsbildung an, während der Ausgang des zweiten Subtrahierers 3113 mit einer zweiten Einheit 3115 zur Betragsbildung verbunden ist. Die Ausgänge der ersten und zweiten Einheit zur Betragsbildung liegen gemeinsam an einer Einheit 3116 zur Maximalwertbestimmung an, deren Ausgangssignal über einen ersten Abschwächer 3117 und einen sich daran anschließenden ersten Tiefpaß 3118 der mit Schwellwerten beaufschlagten Kennliniensteuerung 316 zugeführt wird.

Figur 4 zeigt im Detail den Aufbau der Schaltungseinheiten 313, 314, 315 zur Erzeugung von Bilddifferenzen. Diese weisen ein erstes und ein zweites Vertikal-Filter 3130, 3131 auf, deren Ausgänge an einem dritten Subtrahierer 3132 anliegen. Der Ausgang des dritten Subtrahierers 3132 ist mit dem Eingang eines zweiten Tiefpasses 3133 verbunden. Dessen Ausgangssignal wird über eine dritte Einheit 3134 zur Betragsbildung sowie einen sich daran anschließenden zweiten Abschwächer 3135 einem Begrenzer 3136 zugeführt.

In der ersten und dritten Schaltungseinheit 313, 315 werden jeweils Halbbilder unterschiedlicher Rasterlage verarbeitet. Dem wird dadurch Rechnung getragen, daß die Vertikal-Filter 3130, 3131 eine Verschiebung der Rasterlage durchführen, so daß beide Halbbilder danach die gleiche Rasterlage aufweisen. In der zweiten Schaltungseinheit 314 werden demgegenüber Halbbilder mit gleicher Rasterlage verarbeitet. In diesem Fall wird lediglich eine Tiefpaßfilterung in vertikaler Richtung durchgeführt. Die Rasterlage bleibt dabei unverändert.

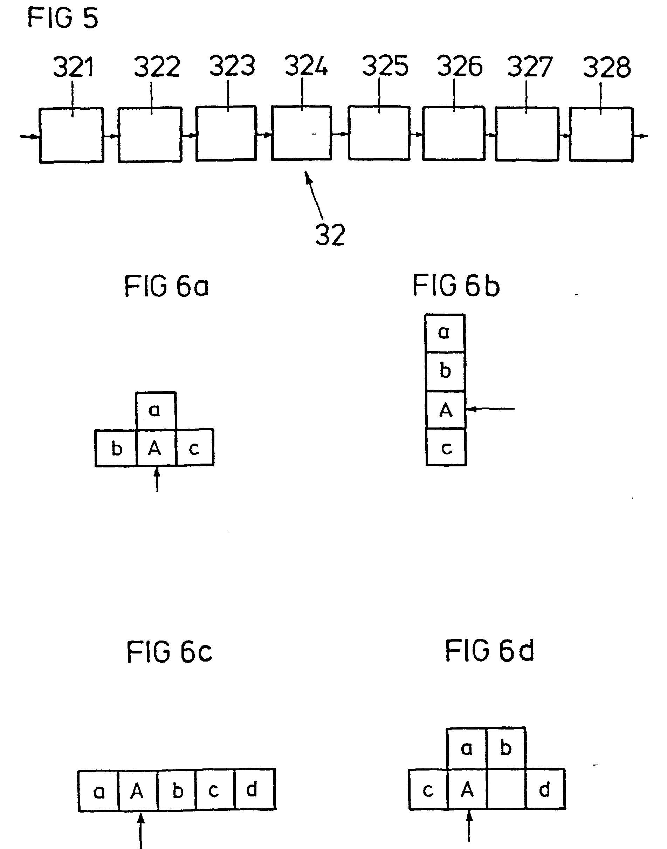

Die zweite Einrichtung 32, mit der die Bildpunkt-Bewegungssignale zur Erzeugung von Bewegungswerten korrigiert bzw. nachbearbeitet werden, ist im Detail in Figur 5 gezeigt und soll anhand der Figuren 6a bis 6h erläutert werden. Diese Nachbearbeitung wird in mehreren Schritten durchgeführt:

Mit einer ersten Korrektureinheit 321 erfolgt ein erstes Löschen (horizontale Verarbeitung) von einzelnen Bildpunkt-Bewegungssignalen, die den ersten Zustand (bewegt) in einer Umgebung von den zweiten Zustand (unbewegt) aufweisenden Bildpunkt-Bewegungssignalen haben. In diesem Fall ist nämlich die Wahrscheinlichkeit groß, daß es sich dabei um eine Fehleinstufung durch die erste Einrichtung 31 handelt, da bewegte Objekte im allgemeinen eine größere Ausdehnung haben. Zur Korrektur dieses Zustandes wird eine Maske über das gesamte Bild geführt und für jedes Bildpunkt-Bewegungssignal entschieden, ob es gelöscht wird oder nicht. Die Maske ist in Figur 6a schematisch dargestellt:

Das aktuelle Bildpunkt-Bewegungssignal A mit dem ersten Zustand wird gelöscht bzw. in den zweiten Zustand überführt, wenn alle umliegenden Signale a, b und c den zweiten Zustand zeigen. Das korrigierte Signal A wird bei der Korrektur des folgenden Signals, also nach Verschiebung der Maske um einen Bildpunkt nach rechts, zum Punkt b. Für die Korrektur des exakt unter dem Signal A liegenden Signals wird ebenfalls der korrigierte Wert an der Stelle A als a verwendet. Dies hat zur Folge, daß die einmal berechneten Werte wieder rekursiv als Eingangswerte für die folgenden Korrekturen verwendet werden. Dadurch wird erreicht, daß der Lösch-Algorithmus sehr effektiv arbeitet.

Mit einer zweiten Korrektureinheit 322 erfolgt ein Löschen von Zeilen (vertikale Verarbeitung). Dabei löscht ein nächster Block jeweils einzelne horizontal verlaufende Linien. Die Korrektur erfolgt wieder für jeden Bildpunkt. Die benutzte Maske ist in Fig 6b gezeigt:

Das Bildpunkt-Bewegungssignal A des aktuellen Bildpunktes wird in den zweiten Zustand gebracht, wenn die Signale eine und zwei Zeilen darüber und eine Zelle darunter den zweiten Zustand aufweisen. Hierbei wird nichtrekursiv gearbeitet.

Mit einer dritten Korrektureinheit 323 folgt dann ein erstes Einfügen von Bildpunkt-Bewegungssignalen (horizontale Verarbeitung), wobei die entsprechende Maske in Figur 6c gezeigt ist:

Nach den ersten beiden Schritten existieren noch einzelne gesetzte Bildpunkt-Bewegungssignale mit einer Ausdehnung von zwei Bildpunkten in horizontaler Richtung. Diese sollen später mit einer vierten Korrektureinheit 324 gelöscht werden. Es gibt jedoch auch innerhalb bewegter Objekte solche Zweiergruppen, die natürlich nicht gelöscht werden dürfen. Da sich die entsprechenden Bildpunkte innerhalb größerer bewegter Objekte befinden, existieren in deren näherer Umgebung immer mehrere Bildpunkt-Bewegungssignale mit dem ersten Zustand. Deshalb kann das Löschen verhindert werden, indem die Lücken dazwischen mit Bildpunkt-Bewegungssignalen des ersten Zustandes aufgefüllt werden. Dies erfolgt mit der dritten Korrektureinheit 323, indem die horizontal benachbarten Bildpunkt-Bewegungssignale a, b, c und d betrachtet werden. Ist eines der Signale a oder A gesetzt und gleichzeitig auch eines der Signale b, c, d gesetzt, so wird das aktuelle Bildpunkt-Bewegungssignal in den ersten Zustand gebracht. Dieser Algorithmus arbeitet rekursiv, d.h. das Ergebnis der Korrektur wird bei der folgenden Korrektur als Punkt a benutzt.

Mit der vierten Korrektureinheit 324 folgt ein zweites Löschen von Bildpunkt-Bewegungssignalen (horizontale Verarbeitung). Dieser Vorgang ist in Figur 6d verdeutlicht. Das aktuelle Bildpunkt-Bewegungssignal A erhält den zweiten Zustand, wenn keines der umliegenden Bildpunktsignale a, b, c, d den ersten Zustand aufweist. Auch dieser Algorithmus arbeitet rekursiv.

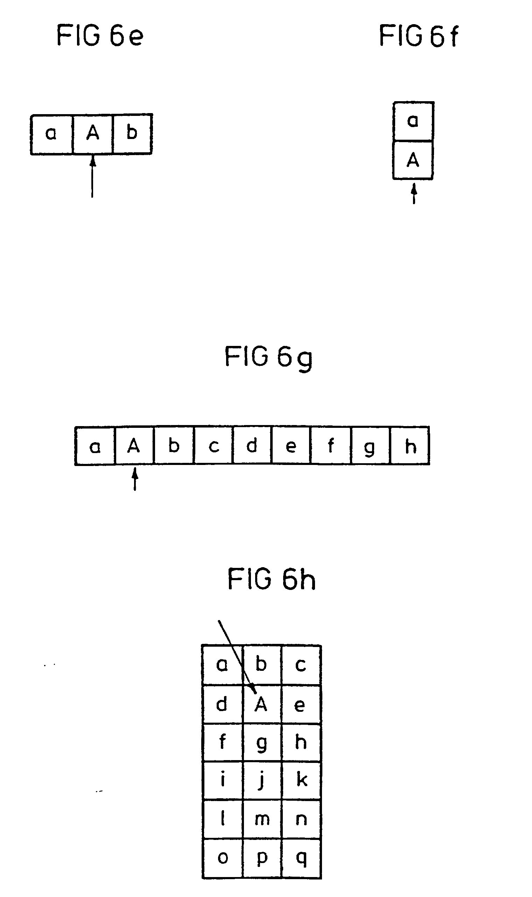

Mit einer fünften Korrektureinheit 325 wird eine Erweiterung (horizontale Verarbeitung) der Bildpunkt-Bewegungssignale vorgenommen. Dies ist in Figur 6e verdeutlicht. Mit diesem Schritt wird ein Bereich von Bildpunkt-Bewegungssignalen, die den ersten Zustand aufweisen, in horizontaler Richtung am linken und rechten Rand jeweils um einen Bildpunkt vergrößert. Dazu kann eine einfache ODER-Verknüpfung der drei Bewegungssignale a, A und b dienen. Es wird nicht rekursiv gearbeitet.

Mit einer sechsten Korrektureinheit 326 folgt dann gemäß Figur 6f eine Zeilenerweiterung (vertikale Verarbeitung), mit der Bereiche, die den ersten Zustand aufweisen, in vertikaler Richtung um eine Zeile vergrößert werden.

Mit einer siebten und achten Korrektureinheit 327 und 328 wird nun eine Homogenisierung der bewegten Bereiche durch Einfügen von Bildpunkt-Bewegungssignalen mit dem ersten Zustand vorgenommen. Die vorhergehenden Schritte haben bewirkt, daß nicht erwünschte Bewegungssignale eliminiert worden sind, so daß nun inhomogene bewegte Bildbereiche großzügig aufgefüllt werden können.

Mit der siebten Korrektureinheit 327 erfolgt ein zweites Einfügen von Bildpunkt-Bewegungssignalen vorgenommen, das in Figur 6g gezeigt ist. Dieser Schritt arbeitet in horizontaler Richtung. Wenn der bereits verarbeitete Wert a oder der aktuelle Wert A gesetzt sind und gleichzeitig einer der Werte b, c, d, e, f, g oder h gesetzt ist, erhält der aktuelle Wert den ersten Zustand. Es wird rekursiv gearbeitet.

Mit der achten Korrektureinheit 328 werden schließlich Zeilen eingefügt (vertikale Verarbeitung). Dies ist in Figur 6h verdeutlicht. Das aktuelle Bildpunkt-Bewegungssignal A erhält den ersten Zustand, wenn in einer der ersten beiden Zeilen zwei Werte gesetzt sind und gleichzeitig in einer der folgenden vier Zeilen zwei Werte gesetzt sind. Auch hierbei wird rekursiv gearbeitet. Die Werte a, b, c und d sind somit bereits korrigierte Werte.

Insgesamt werden folglich die Bildpunkt-Bewegungssignale so korrigiert, daß Bewegungswerte entstehen, die klar voneinander abgegrenzte homogene Bildbereiche festlegen, die entweder zusammenhängend als bewegt oder als nicht bewegt definiert sind.

## Patentansprüche

1. Schaltung zur Wandlung einer Bildrate, bzw. Halbbildwiederholfrequenz, bei einer Videosignal-Wiedergabeeinrichtung nach einem bewegungsadaptiven Verfahren, mit einem Bewegungsdetektor zum Erzeugen von Bewegungswerten von Bildpunkten, mit denen eine Einrichtung zum Umschalten einer Halbbildfolge bei der Verdoppelung der Bildrate ansteuerbar ist, wobei
der Bewegungsdetektor (3) eine erste Einrichtung (31) zum Erzeugen von Bildpunkt-Bewegungssignalen umfaßt, die für jeden als bewegt ermittelten Bildpunkt einen ersten Zustand und für jeden als unbewegt ermittelten Bildpunkt einen zweiten Zustand haben, **gekennzeichnet durch** eine zweite Einrichtung (32), mit der die Bildpunkt-Bewegungssignale zur Erzeugung von Bewegungswerten in der Weise korrigiert werden, daß ein Zustand, der von übereinstimmenden Zuständen benachbarter Bildpunkte abweicht, unberücksichtigt bleibt.

2. Schaltung nach Anspruch 1,
**dadurch gekennzeichnet, daß**
die erste Einrichtung (31) zur Ermittlung des ersten oder zweiten Zustandes Einheiten (316, 317, 318) zur Erzeugung gesteuerter Kennlinien zur Bewertung von Halbbilddifferenzen in Abhängigkeit von Zeilendifferenzen umfaßt, wobei bei kleinen Zeilendifferenzen die Bewegungsempfindlichkeit erhöht und bei großen Zeilendifferenzen die Bewegungsempfindlichkeit verringert ist.

3. Schaltung nach Anspruch 2,
**dadurch gekennzeichnet, daß**
die erste Einrichtung (31) Schaltungseinheiten (311, 312; 313, 314, 315) zur Bildung von Zeilen- und Halbbild-Differenzen aufweist, wobei die Halbbild-Differenzen mit den Einheiten (316, 317, 318) zur Erzeugung gesteuerter Kennlinien, die jeweils mit den Zeilendifferenzen beaufschlagt werden, bewertet und auf 1-Bit-Signale abgebildet und diese mit einem ODER-Gatter (319) zur Erzeugung der Bildpunkt-Bewegungssignale verknüpft werden.

4. Schaltung nach Anspruch 2 oder 3,
**dadurch gekennzeichnet, daß**
die dritte, vierte und fünfte Schaltungseinheit (313, 314, 315) zur Erzeugung von drei Halbbilddifferenzen aus einem ersten, einem zweiten und einem dritten Halbbild dienen und daß die Einheiten (316, 317, 318) zur Erzeugung gesteuerter Kennlinien mit dem Maximum der Zeilendifferenzsignale aus dem ersten und dem zweiten Halbbild gesteuert werden.

5. Schaltung nach einem der vorhergehenden Ansprüche,
**dadurch gekennzeichnet, daß**
die zweite Einrichtung (32) eine erste Korrektureinheit (321) zur Bearbeitung der Bewegungssignale jedes Bildpunktes in der Weise umfaßt, daß der erste Zustand in den zweiten Zustand korrigiert wird, wenn die Bewegungssignale aller angrenzenden Bildpunkte den zweiten Zustand aufweisen, wobei bei der Bearbeitung eines folgenden Bildpunktes ein zuvor korrigierter Zustand verwendet wird.

6. Schaltung nach einem der vorhergehenden Ansprüche,
**dadurch gekennzeichnet, daß**
die zweite Einrichtung (32) eine zweite Korrektureinheit (322) zur Bearbeitung aller Bewegungssignale in einer Zeile in der Weise umfaßt, daß der erste Zustand in den zweiten Zustand geändert wird, wenn die Bewegungssignale in einer und zwei Zeilen darüber sowie in einer Zeile darunter den zweiten Zustand aufweisen.

7. Schaltung nach Anspruch 6,
**dadurch gekennzeichnet, daß**
die zweite Einrichtung (32) weitere Korrektureinheiten (327, 328) umfaßt, mit denen bewegte Bildbereiche durch Einfügen von Bewegungssignalen, die den ersten Zustand aufweisen, homogenisiert werden.

## Claims

1. A circuit for transforming an image rate, or field reproduction frequency, in a video signal reproduction device according to a motion-adaptive method, having a motion detector for generating motion values of picture elements with which a device for switching over a field sequence upon the doubling of the image rate can be controlled, in which the motion detector (3) comprises a first device (31) for generating picture element motion signals, which have a first state for each picture element determined to be moved and a second state for each picture element determined to be unmoved,
**characterised by** a second device, with which the picture element motion signals for generating motion values are corrected so that a state which differs from corresponding states of adjacent picture elements is still not taken into consideration.

2. A circuit according to Claim 1,
**characterised in that** the first device (31) for determining the first or second state comprises units (316, 317, 318) for generating controlled characteristic curves for evaluating field differences in dependence on line differences, wherein the motion sensitivity is increased with small line differences and the motion sensitivity is decreased with large line differences.

3. A circuit according to Claim 2,
**characterised in that** the first device (321) comprises circuit units (311, 312; 313, 314, 315) for forming line and field differences, wherein the field differences with the units (316, 317, 318) for generating controlled characteristic curves, which are in each case supplied with the line differences, are evaluated and mapped on 1 bit signals and these are linked with an OR gate (319) for the generation of the picture element motion signals.

4. A circuit according to Claim 2 or 3,
**characterised in that** the third, fourth and fifth circuit elements (313, 314, 315) serve to generate three field differences from a first, a second and a third field
**and in that** the units (316, 317, 318) for generating controlled characteristic curves are controlled with the maximum of the line difference signals from the first and the second fields.

5. A circuit according to one of the preceding Claims,
**characterised in that** the second device (32) comprises a first correction unit (321) for processing the motion signals of each picture element so that the first state is corrected into the second state if the motion signals of all adjacent picture elements comprise the second state, with a previously corrected state being used for the processing of a following picture element.

6. A circuit according to one of the preceding Claims,
**characterised in that** the second device (32) comprises a second correction unit (322) for processing all motion signals in a line so that the first state is changed into the second state if the motion signals in one and two lines above it and also in one line beneath it comprise the second state.

7. A circuit according to Claim 6,
**characterised in that** the second device (32) comprises further correction units (327, 328) with which moved picture areas are homogenised by inserting motion signals having the first state.

## Revendications

1. Circuit de conversion d'un débit d'images (ou d'une séquence de récurrence de trame) dans une installation de reproduction de signaux vidéo, selon le procédé d'adaptation de mouvement, utilisant un détecteur de mouvement pour générer des valeurs de mouvement de points images à l'aide desquelles une installation de commutation d'une suite de trames est commandée pour le doublement du débit d'images,
le détecteur de mouvement (3) ayant une première installation (31) pour générer des signaux de mouvement de points images qui ont un premier état pour des points images jugés comme mobiles et un second état pour les points images jugés comme fixes,
**caractérisé par**
une seconde installation (32) qui corrige les signaux de mouvement de points images pour générer des valeurs de mouvement de façon qu'un état qui diffère des états concordants de points images voisins ne soit pas pris en compte.

2. Circuit de conversion d'un débit d'images selon la revendication 1,
**caractérisé en ce que**
la première installation (31) pour déterminer le premier ou le second état comprend des unités (316, 317, 318) pour générer des courbes caractéristiques commandées pour évaluer des différences de trames en fonction de différences de lignes, et pour de petites différences de lignes, on augmente la sensibilité au mouvement et pour de grandes différences de lignes on diminue la sensibilité au mouvement.

3. Circuit de conversion d'un débit d'images selon la revendication 2,
**caractérisé en ce que**
la première installation (31) comprend des circuits (311, 312, 313, 314, 315) pour former des différences de lignes et de trames, les différences de trames étant utilisées par les unités (316, 317, 318) pour générer des courbes caractéristiques commandées avec chaque fois les différences de lignes, et sont copiées dans des signaux à un bit et ceux-ci sont combinés par une porte OU (319) pour générer des signaux de mouvement de points images.

4. Circuit de conversion d'un débit d'images selon la revendication 2 ou 3,
**caractérisé en ce que**
des troisième, quatrième, cinquième circuits (313, 314, 315) génèrent trois différences de trames à partir de la première, de la seconde et de la troisième trames, et les unités (316, 317, 318) pour générer les courbes caractéristiques commandées reçoivent le maximum des signaux de différences de lignes entre la première et la seconde trames pour être commandées.

5. Circuit de conversion d'un débit d'images selon l'une des revendications précédentes,
**caractérisé en ce que**
la seconde installation (32) est une première unité de correction (321) pour traiter les signaux de mouvement de chaque point image de façon que le premier état soit corrigé et devienne le second état si les signaux de mouvement de tous les points images voisins sont au second état, et lors du traitement d'un point image suivant, on utilise un état corrigé précédemment.

6. Circuit de conversion d'un débit d'images selon l'une des revendications précédentes,
**caractérisé en ce que**
la seconde installation (32) comprend une seconde unité de correction (322) pour traiter tous les signaux de mouvement dans une ligne de façon que le premier état soit modifié en un second état si les signaux de mouvement d'une première et d'une seconde ligne au-dessus et d'une ligne en-dessous sont au second état.

7. Circuit de conversion d'un débit d'images selon la revendication 6,
**caractérisé en ce que**
la seconde installation (32) comprend d'autres unités de correction (327, 328) à l'aide desquelles on homogénéise des zones d'images mobiles en insérant des signaux de mouvement qui sont au premier état.
